# EUROPEAN PATENT SPECIFICATION

(11) **EP 2 747 055 B1**
(45) Date of publication and mention of the grant of the patent: **04.05.2016**
(21) Application number: 12199032.9
(22) Date of filing: 21.12.2012
(51) Int. Cl.: G06K 9/00

(54) **Method and system for generating a driver support product for a racing driver**
Verfahren und System zur Erzeugung eines Fahrerunterstützungsprodukts für einen Rennfahrer
Procédé et système pour générer un produit de support de pilote pour un pilote de course

(43) Date of publication of application: 25.06.2014
(73) Proprietor: Bäckström, Mikael, 832 44 Frösön (SE); Koptioug, Andrei, 831 51 Östersund (SE)
(72) Inventor: Bäckström, Mikael, 832 44 Frösön (SE); Koptioug, Andrei, 831 51 Östersund (SE)
(74) Representative: Awapatent AB

(56) References cited:
- EP-A1- 2 372 669
- EP-A2- 1 905 643
- FR-A1- 2 448 202
- JP-A- 2009 001 157
- US-B1- 6 343 253

## Description

### FIELD OF THE INVENTION

The present invention relates to a method and a system for generating a driver support product for a racing driver.

### BACKGROUND OF THE INVENTION

Racing drivers, such as drivers driving rally races, are commonly supported by a co-driver, who uses pace notes to tell the driver what the road ahead looks like. In conjunction with a rally competition, every rally team has to visit the track well before the competition in order to get acquainted with the road and to generate the pace notes by driving through the track and simultaneously taking the notes.

In addition to the economic aspects of these preparations, there is also a risk for errors in the pace note generation, i.e. the co-driver sometimes, although seldom, make an ambiguous or erroneous notation of the properties of the track. During a competition there are often no margins, which mean that even a minor error may cause the driver to go off the track. In worst case the result is a fatal crash, and often the result is a damaged car or the loss of racing position.

An example of an existing system for generating pace notes is Jemba Inertia Notes System. An operator collects data about the track by driving it at normal speed. A sensor set and video camera are arranged in the car, and the sensor signals representing the car motion through the track in a particular run are recorded. The track data is extrapolated on basis of these collected data and the video taken. Pace notes are generated according to the recorded data. Any template for pace notes can be used, such as notes according to the Swedish national safety notes system, or the National route notes system for the USA. A disadvantage of this system is that there is no other way to generate the pace notes but to drive the track at full speed, and the pace notes will be dependent on how the particular driver was going through the track in the particular car during the data collection process. In other words, in this method the data are related to a specific trajectory a driver have chosen when driving the track during the data collection process, and information about other features can only be extracted from the video in a limited way. Thus, any pace notes generated out of this limited data set would be limited as well, and closely related to the specific trajectory. Thus, in order to expand or improve the extracted pace notes, for example if the race car driver would like to choose a different motion trajectory when driving the track, additional data should be collected, in fact generating an additional set of the pace notes related to a second chosen trajectory.

FR 2 448 202 A1 discloses, a method and device to generate a driving support product for a racing driver.

### SUMMARY OF THE INVENTION

It is an object of the present invention to provide a method and a system for computer-assisted generation of a driver support product for a racing driver that alleviates the above-mentioned problems of the prior art.

This is achieved by a method according to the present invention as defined in claim 1, as well as by a system as defined in claim 15.

Thereby a three-dimensional model of the track and its nearest surroundings is created, so that data describing geometric properties of the track, for example related to the road gradients along and across the track, such as turns, slopes, crests, etc., can be generated. Furthermore, it is possible to extract information about all possible trajectories for the vehicle motion through the track. By generating a template for the generation of pace notes related to the track properties, it is possible to generate pace notes for any track after having determined its properties, without the driver and co-driver having to actually drive it. It should be noted that by generating the template by means of pace notes from a single driver or several different drivers, the template will typically additionally relate to individual or composite driving styles, etc. It is understood by a person skilled in the art that gathering a huge amount of three dimensional geometric data, analyzing that data to generate the track property data, and generate the pace notes by comparing the track property data with the templates, require machine computational power, and application of specific algorithms.

It should be noted that for the purposes of this application, the term "track" is generally defined as a continuous area of the ground, which is meant to be used by the vehicles participating in the race. Advantageously, the scanning can be made independently of an absolute geographical coordinate position, although it may be combined with determining absolute positions along at least some points of the track as well. Different kinds of scanning are feasible, such as 3D laser scanning, image recording by multiple offset cameras, such as for example stereo video, etc., which provides adequate three dimensional geometric data. Preferably, a three-dimensional surface representation with a large number of densely positioned sample points should be obtained. For example, for a relatively flat well-defined track area the sample points could be collected for a strip of certain predetermined width with densely placed sampling points, while the surrounding environment is not represented at all, or represented by a limited number of sampling points. However, in some cases it could be difficult to separate the track from the surroundings during the data collection process, and more accurate models, and more dense sets of sampling points placed in a wider strip covering the track and its surroundings will be necessary.

In accordance with an embodiment of the method, it comprises identifying scanning data points representing the track by comparing scanning data points to detect deviations between them, and applying at least one deviation threshold and horizontal extension parameters.

In accordance with an embodiment of the method, said estimating track properties comprises identifying at least one property of a set of properties comprising curves, crests, and slopes. These are the properties traditionally reflected in the pace notes.

In accordance with an embodiment of the method, said estimating track properties comprises determining a trajectory within the track, and determining the track properties along the trajectory. Since the properties of the track can differ across the width of the track, and it can be possible to choose different portions of the track to drive on, it is an advantage to determine the trajectory and base the estimation of track properties thereon. In accordance with an embodiment of the method, the determination of a trajectory comprises estimating a centre line of the track as the trajectory, while according to other embodiments either a shortest path through the track or a path based on experience of how a driver would drive along the track is estimated as the trajectory. Thus, the method provides for an advantageous freedom of choice of trajectory.

In accordance with an embodiment of the method, the operation of determining a trajectory comprises receiving data of a trajectory driven by a user when driving a computer executable program for simulating driving along the track with the vehicle; adapting an originally determined trajectory to the trajectory driven by the user; and adjusting the pace notes accordingly. Thus, it is possible to prepare a program whereby the track is virtually drivable at full speed, and that virtual driving is trackable and usable to adjust the actual pace notes.

In accordance with an embodiment of the method, a raster is applied on the data set to generate a data subset, which is used for further operations. By applying a raster the amount of data that has to be processed is reduced, while keeping the raster dense enough to enable a desired detection of geometric differences. For instance, when identifying which scanning data points are related to the track a lower resolution than originally obtained by an accurate scanning method can be used. However, the initial data set is saved so it can be used multiple times.

In accordance with an embodiment of the method, the template is determined on basis of a mean value of several received sets of manually determined pace notes.

In accordance with an embodiment of the method, the generation of a template includes generating a template adapted to an individual user. The method is broadly applicable and adaptable, since it can provide both generalized and individualized pace notes. The individualization is easily obtained by using individual pace notes in the learning phase as a reference for constructing a pace note generation template. And in the case of individually tailored pace notes such process of continuing training will lead to continuous improvement of the fitting of automatically generated pace notes to the style and preferences of a particular driver.

In accordance with an embodiment of the method, it comprises generating vocalized pace notes related to and synchronized in time with the corresponding track properties; and providing the vocalized pace notes at a device arranged to detect where along a track it is and timely playback the vocalized pace notes. This allows for driving without a co-driver.

In accordance with an embodiment of the method, the generation of a driving support product further comprises generating a computer executable program for simulating driving along the track with the vehicle. By means of the program the driver is able to train on a track without having to actually drive it with the vehicle. Additionally, before a competition it is usually only allowed to drive a track at a substantially limited speed, but in the program the track can be driven at full speed. According to a further embodiment additionally a kinematic model of the vehicle is included, making its movements on the screen even more realistic.
In accordance with another aspect of the invention, a support system for generating a driving support product is provided. The support system comprises a scanner arranged to generate a data set comprising three dimensional geometric data representing a track; and a data processing device, comprising:
- an estimator arranged to estimate track properties by analyzing the data set, and to generate corresponding track property data;
- a template generator arranged to generate a template for generating pace notes on the track property data ;
- a pace note digitizer arranged to scan and digitally represent written pace notes;
- a storage arranged to store a set of digitized pace notes of a learning track;
- a matching unit arranged to match the pace notes of the learning track with track property data of the learning track; and
- a user interface arranged to output pace notes, which are comprised in the generated driving support product.

The driving support product can comprise one or more of pace notes, pace notes with virtual model of the road for visual support, pace notes with virtual model of the road for visual support and additional kinematic model of the vehicle response to the controls and motion for full simulation of the driving experience can be provided as well.

The aspects listed above and below, and advantages of the invention will be apparent from and elucidated with reference to the embodiments described hereinafter.

### BRIEF DESCRIPTION OF THE DRAWINGS

The invention will now be described in more detail and with reference to the appended drawings in which:
Fig. 1 is a flow chart of an embodiment of the method;
Fig. 2 illustrates geometric data generation according to an embodiment of the method;
Fig. 3 illustrates some trajectory options;
Fig. 4 illustrates a possible method of trajectory estimation according to an embodiment of the method;
Fig. 5 illustrates an elevation graph;
Fig. 6 illustrates circle fitting;
Fig. 7 illustrates estimation of the slope of the track;
Fig. 8 is an example of pace notes;
Fig. 9 is a bock diagram of an embodiment of the system according to the present invention; and
Fig. 10 is a block diagram of an embodiment of the system.

### DESCRIPTION OF EMBODIMENTS

Embodiments of the method and system according to the present invention are described below.

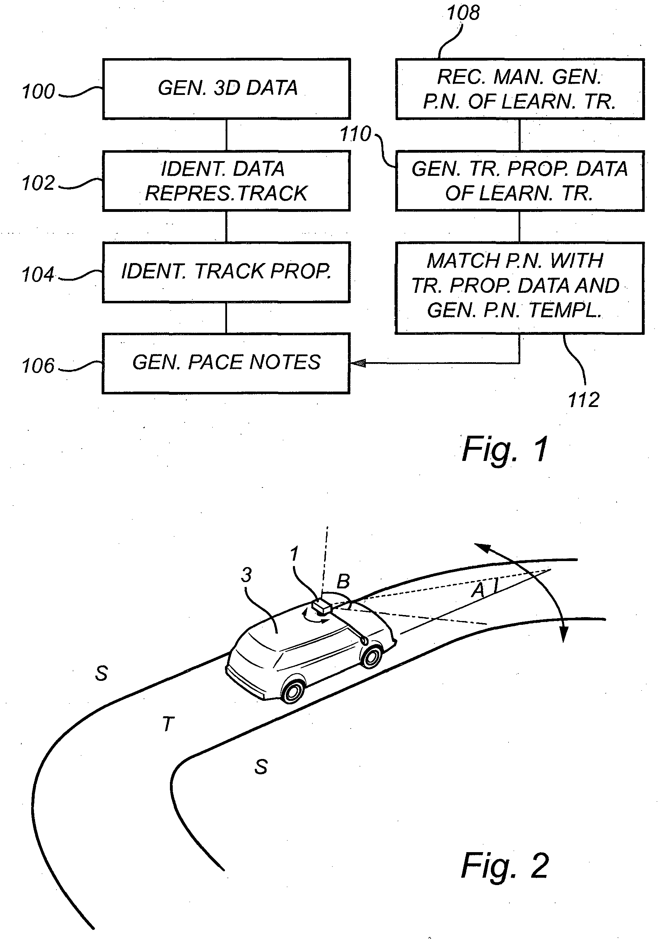

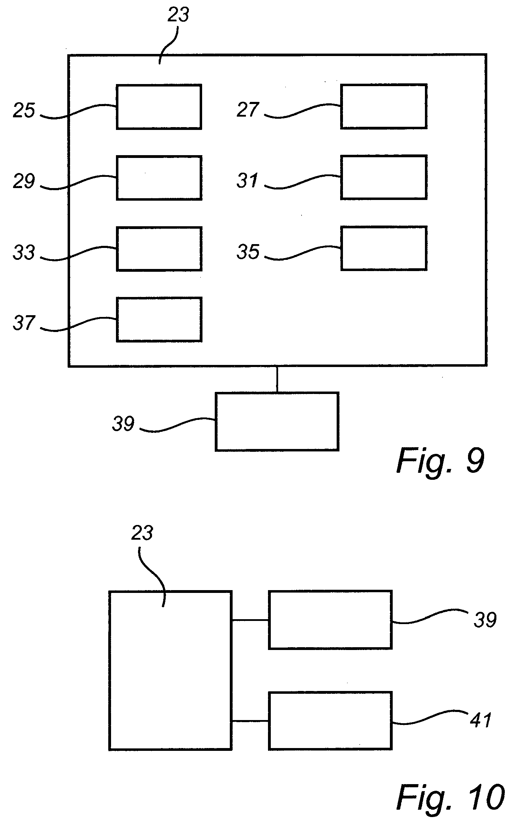

According to an embodiment of the method, it comprises the following stages and operations, as illustrated in Fig. 1. An embodiment of a system for performing the method is illustrated in Figs. 2 and 9. A data set of three-dimensional geometric data, i.e. 3D data, about a ground area comprising a track T and its closest surroundings S is generated by means of a laser scanning device 1, which is mounted on a vehicle 3. The generation of the data set comprises generating scanning data points being related to each other in a three dimensional space by using a corresponding coordinate system. At present laser scanning is preferred, but other alternatives are feasible, such as a special set of streaming, or video, cameras, if they provide adequate and precise initial data set. Typically, the vehicle 3 is a car, but other alternatives could be used, such as other ground based vehicles but also an air based vehicles, such as a helicopter or a drone. The laser scanning device 1 is a lidar (light detection and ranging) laser system, which scans the ground area ahead of and around the vehicle at an angle A to the ground, where the angle A is chosen to enable a precision data collection yielding a sufficiently full data set, such as for instance to enable determination of the structure of the track surface. The scanning is made by sweeping the laser ray back and forth from one side to the other, ahead of and at the sides of the vehicle, or through any other path, and sampling scanning data at a large number of points. Thereby scanning data points are provided at a predetermined spacing in all needed surroundings of the vehicle, over a lateral angle B. As a result of the laser scanning a data set comprising a large number, typically in the order of hundreds of millions, of scanning data points, below also called a point cluster, is acquired and stored in a database. A typical spacing of the scanning data points, further on referred to as a spatial resolution of the scanning, is one or a few centimeters between two neighboring scanning data points. Smaller spacing of the scanning data points is also possible, but would need additional storage capacity, extra processing capacity, etc., if used without consecutive re-sampling of the collected data set. Thus, the optimum spacing of scanning data points should provide enough data to properly represent the track. In such a case the collected data set is abundant enough but not excessive, so the further data analysis can provide the information needed even without absolute, but only with relative, scanning data point positioning. Thereby it is possible to create a comprehensive high precision three-dimensional model of the track and its nearest surroundings. Because of the comprehensive nature of the initially collected data set it becomes possible to extract the detailed information about all possible trajectories for the vehicle motion through the track, as will be further explained in the following.

For the purposes of describing detailed embodiments below, a drivable area is defined as an area, where the vehicle, e.g. the car, may appear during the competition or training session. Furthermore, the track is more specifically defined as a part of the drivable area, where the wheels of the vehicle may appear during the competition or training session. The nearest surroundings of the drivable area are defined as the part of the surrounding landscape and its features that the driver and co-driver may perceive and use for better orientation during the competition or training session. All algorithms used before the actual pace note generation will commonly use these terms in the broadest possible way.

These areas may be narrowed when determining the possible vehicle trajectories in the process of template generation, as different drivers often have their own preferences where their vehicle should or should not go during the race. Vehicle trajectory here and further on is determined as the line on the surface of the drivable area or the track onto which the position of the chosen point in the vehicle, e.g. center of gravity or center of the geometric footprint, is projected during the motion.

Having thus generated the data set, further operations are performed on basis thereof, while an appropriate level of detail of the 3D model of the track is chosen for a particular operation or set of operations by making an appropriate selection among the data of the data set.

Next the data set, or point cluster, is analyzed in order to identify a sub-amount of the measuring points which represents laser light reflections originating from the track and not from the areas adjacent to the track. For this matter appropriate algorithms for data analysis of the point cluster are executed by means of computer acting on the contents of the database. According to this embodiment the algorithms are based on comparisons between scanning data points to identify length, height, and steepness of the slopes, which are identifiable by differences in the values belonging to adjacent and nearby points. The track is typically characterized by a relatively even surface extending some meters in width and many meters in length, and being free from very sharp protrusions and from protrusions extending above a height of a few decimeters. The precision of this operation can also be improved by using various processing algorithms representing adjustable or 'trainable' filters responsible for the selection. Corresponding filtering procedures (like adjustable and tracking filtering) are well developed within the signal and image processing techniques.

For example, the algorithms compare the data set to be analyzed in all three directions. In order to detect the drivable area the plane selected for analysis is the plane that mainly represents the horizontal plane. Adjoining points that have pairing values are clustered and then the different clusters are compared. If the comparison of the clusters shows small deviations, they in their turn are fused into a common surface. This method is reiterated until the preset parameter of deviation exceeds a threshold value which shows that the position is no longer within the track, and similarly the drivable area is estimated. In addition to this a comparison with the vector of plausible travel that also determines plausible width of the track and the drivable area, respectively, is performed.

This analysis designed to identify a sub-amount, or sub-set, of the scanning data points, which is full enough to represent the track, is raster-based. This means that every single scanning data point of the point cluster stored in the database is not used, but a raster, or grid, is applied such that the distance between adjacent scanning data points taken to represent the track in further analysis is about a decimeter. Using such a reduced data sub-set substantially decreases the calculation effort without decreasing the likelihood to identify the correct scanning data points, which have actually resulted from laser light reflections from the track. However, the full data set coming from the scanning is preferably saved for generating alternative products, or for applying other types of data processing for improving the final results.

Having thus identified the track itself, next the track properties are identified by analyzing the 3D data collected. Track properties, that conventionally have been notified by a co-driver by means of the pace notes, typically include, but are not limited to, curves, crests and slope of the track, and in some cases additional features like nearby stones, ditches, etc. The slope is commonly meaning the surface gradient, i.e. the inclination, across the driving direction; crest is commonly meaning the changing gradient along the driving direction from uphill to downhill and the curve means the deflection of the trajectory from a straight line towards the left or right.

These properties affect the driving style, as the main goal of the majority of competitions is to drive as fast as possible and keeping the car on the track. Thus, for example, when approaching a curve the driver will have to slow down and possibly brake, and change gears. The tighter is the curve, i.e. the smaller is its approximate radius, the more the driver will have to slow down. If the track slopes in this place as well there will be a difference in the way the driver passes the curve depending on which way the track slopes. If it slopes inwards, i.e. opposite to the centrifugal force pushing the car from the track, the driver can drive through the curve faster than in the case when the track slopes outwards. In the latter case the corresponding ground reaction force projection adds to the centrifugal force and the car may go off the track or the drivable area at lower speed.

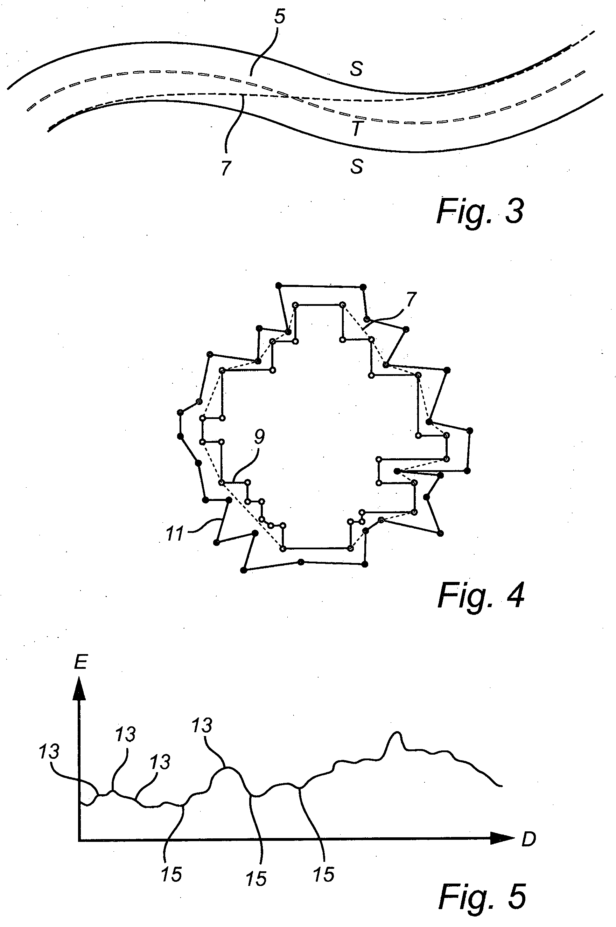

In this embodiment of the method trajectory parameters are identified as follows on basis of a virtual reference trajectory, which is first determined. One option is to define a trajectory for the driving near the middle of the track, as exemplified at reference numeral 5 in Fig. 3. The centre of the track is found by means of an image processing method called morphological skeletonization. Another option is to define the trajectory as a shortest possible path 7 the car can take through the track. For example this is done by applying a so called rubber band algorithm to the sub-amount of data, as illustrated in Fig. 4, where scanning data points representing one side of the track are interconnected to form a first side border 9, and scanning data points representing the other side of the track are interconnected to form a second side border 11, and the shortest path 7 between points, but still residing within the side borders 9, 11, is found. As a further option, alternative and maybe more complex algorithms are used for finding the optimized or averaged reference trajectory using physical models, and other assumptions reflecting how a driver would choose to drive along the track. In this option an optimal path is found taking into account features such as curves, banking of curves (track slope in the curves), estimated vehicle speed, driving direction, etc. In the other words, the trajectory is the subset of the points from the collected data set forming a curve in a three-dimensional space Tr(x,y,z), representing a real or possible trajectory of the car moving along the scanned track surface.

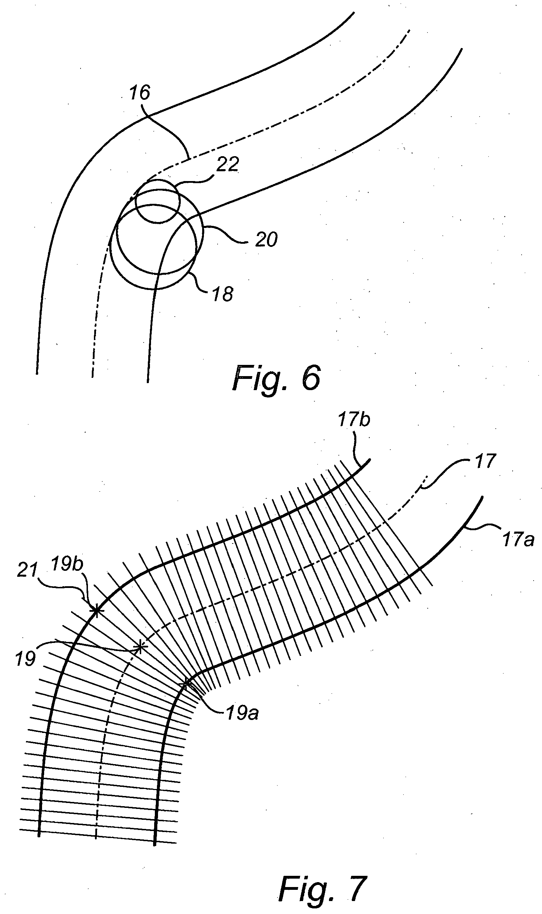

According to this embodiment, the centre line trajectory 16 is estimated and the averaged parameters of the track are defined through the properties of this reference trajectory 16 for the purpose of pace note generation. Having thus defined the virtual reference trajectory, the curvature of the trajectory is estimated. The curvature of the trajectory 16 at a chosen point thereof is determined by approximating a section of this curve, including the point, with a circular arc 18, 20, 22 having a certain radius, as shown in Fig. 6.

Only if the reference trajectory 16 is bending sharply enough, e.g. one having a radius below a chosen threshold is marked as a curve in the pace notes. Thereby for the purpose of pace note generation all sections with significant curvature along the reference trajectory (and thus the track) and their character, here the effective radius, is identified.

The identification of crest properties is performed as follows. The track is followed along the trajectory, and the height variations are determined. An elevation profile is thereby obtained, as illustrated in Fig. 5. The same principle as for curve detection is then applied, i.e. circle fitting is used to determine the sharpness of the crests 13, but in a vertical plane rather than a horizontal plane. If desired, the sharpness of valleys 15 can be determined as well. A predetermined lower limit of sharpness, i.e. a threshold radius, is used to select only significant crests 13. If desired, also the trajectory function first and second derivatives in vertical direction dTr(x,y,z)/dz and dTr²(x,y,z)/dz² are calculated and corresponding sharpness of the crests and valleys is associated with the value f the second derivative of the trajectory function in the point corresponding to zero first derivative.

The slope of the track in a chosen trajectory point (xᵢ,yᵢ,zᵢ) 19 is determined by constructing an additional line L(x,y,z) 21, normal to the trajectory 17 in the chosen point using additional points from the full scanned data set, and calculating its first derivative in vertical direction in the chosen point dL(x,y,z)/dz[xᵢ,yᵢ,zᵢ]. In the simplified case, two additional trajectories 17a, 17b spaced to both sides from the chosen trajectory are constructed from the full scanned data set by a pre-determined offset value, as shown in Fig. 7. Finally, the slope is determined as the difference in elevations between two points 19a, 19b on the additional trajectories 17a, 17b, laying on the line 21 normal to the chosen trajectory 17.

The curve properties thus obtained are employed later on when pace notes are associated with the curves, as will be explained below.

Having thus determined, or estimated, the main track properties after choosing corresponding reference trajectory (or trajectories) on basis of a corresponding track property data set, the next operation of the method is to associate this track property data set with a particular template for the pace note generation representing different driving styles and pace note formats, thereby generating a set of pace notes for the track. Another set of the pace notes, representing another driving style or another pace note format, can be generated out of the same track property data set by using another template for the pace note generation.

The comprehensive data set allows to generate pace notes for different trajectories of driving through the track, using either 'composite driver templates', which means representation of certain common driving styles, e.g. safe driving, aggressive driving, down to all details, etc., or 'individual driver templates'; 'ambient condition templates', such as night driving, after rain, soft snow, etc.; or 'vehicle type templates' such as boosted engine, soft suspension, heavy front of the vehicle, etc., and all of this from the same initial data set.

If no template for generation of pace notes for the demanded driving style is available it has to be first generated during a learning phase. There are official standards, or formats of the pace note presentation. However, each pace note presentation format is only relevant for a particular country or even a particular race. Additionally, individual drivers and co-drivers often adjust them within officially prescribed limits to an individual pace note format, which is unique for that driver and/or co-driver. Therefore the present method and system are arranged to be able to handle both standard and individual pace note formats. However, it is also possible to merge several different pace note formats into one common pace note format, which can serve as a good approximation to the majority of common formats, or to represent a certain common driving style, such as by using a 'composite driver' template.

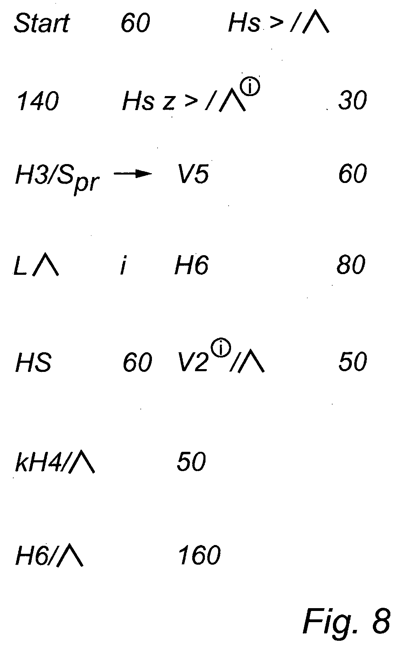

Consequently, according to this embodiment of the method, the learning phase includes receiving at least one set of manually generated pace notes of a learning track, box 108, and matching the pace notes of the learning track with track property data of the learning track, box 112. It is to be understood that track property data of the learning track is generated as explained above. An example of a pace note set for a part of a track is shown in Fig. 8. A person that writes pace notes for a track takes into account not only local track properties coming up next along the track, such as a curve having a certain sharpness and banking, but also track properties ahead of that local track properties. For instance, consider a curve at the end of a full speed straight that taken alone would be labeled "R 4", meaning that it turns to the right and has a sharpness that requires the driver to slow down and change gear down to 4th. If that curve is followed by a second curve of significant sharpness within a maximum distance, then the first curve would be differently labeled, such as "R 2", i.e. the driver will have to brake harder and change gear all the way down to the second. The present method is arranged to look ahead in this way.

During the learning phase, an initial set of pace notes (PN₀) for the representative learning track is generated using one of the 'composite driver's' templates (CDT₀) by choice of the trained operator, or by the suggestions from the driver and the co-driver. This set is compared with the set manually produced by the same driver and co-driver on the same track (PN_{M}). Such comparison can be carried out automatically using digitized representation of the manually taken pace note set, in which case the 'error curves' representing the deflection of two pace note sets is automatically generated, or manually.

The results are analyzed aiming to determine the parts of the track where the difference between two pace note sets exists and why. For example, the reason can be that during actual driving particular parts of the track were driven at higher or lower gear, with different pace, closer to or further from the edges of the drivable area, etc. Corresponding corrections are introduced into the initial template, forming an individual-corrected template (IDT₁). A new set of pace notes (PN₁) is automatically generated and again compared to the manually taken set.

After some training iterations the pace notes automatically generated will differ very little, or not differ at all, from the manually taken pace notes. If the learning track is representative, e.g. in that it well represents the individual features forming the particular driving style and particular pace note formulation style of the individual driver and co-driver, this adjusted individual template (IDT₁) is further used as an individualized one for the particular driver and co-driver for generating pace notes from other scanned tracks.

It should be noted, that each time new set of the pace notes is generated for another track, it in turn can be compared with a manually taken set, or a set which the driver and co-driver produce in any other way. Thus through the process of the template adaptation the template will continuously become more and more representative of the style of the individual driver and co-driver.

It is possible in principle to have the whole iterative process happening automatically based on certain criteria for acceptable differences between the manually taken set of the pace notes and automatically generated ones, i.e. threshold based criteria. One can also make use of the 'mixed' approaches, when only parts of the template adaptation is done entirely automatically, and human analysis is done at certain stages in between the training cycles. Corresponding complex algorithms from the works on artificial intelligence and on the computational optimization can be applied as well for achieving the above.

The learning phase can include several sets of pace notes from several tracks, which sets of pace notes are used to enhance the precision of a first pace note template generated by means of the pace notes for a first track.

Having thus generated a reliable pace note template, the present system is able to generate a set of pace notes for any track for which track property data are generated in the above-described way. Consequently, the set of pace notes is generated by associating the track property data with the template pace notes. In this association operation the track property data are analyzed along the drivable area and a particular pace note corresponding to a particular driving style (represented by a particular pace note template) is generated. This analysis includes a 'look ahead' function, as the driver's actions are not only determined by the present vehicle position, but the track conditions ahead. Thus similar functionality in the data analysis carried out for the purpose of pace note generation, like in the situations as described above, where a curve which taken alone would render one kind of pace note renders another kind of pace note if followed by another particular track property. If several different pace note templates have been generated and stored, then any desired pace note template can be chosen and used to generate the set of pace notes.

According to a basic embodiment of the system it more particularly comprises the scanner 1, and a data processing device 23. The data processing device 23, in turn, comprises an estimator 25, arranged to estimate track properties by analyzing the data set, and to generate corresponding track property data, a template generator 27, arranged to generate a template for generating pace notes on the track property data, a pace note digitizer 29, arranged to scan and digitally represent written pace notes, a storage 31, arranged to store a set of digitized pace notes of a learning track, a matching unit 33, arranged to match the pace notes of the learning track with track property data of the learning track, and a user interface 39, arranged to output pace notes that are comprised in the generated driving support product. Furthermore, the data processing device 23 comprises a database storage 35, storing the data set. According to this embodiment the data processing unit is a computer, which has been programmed to perform the special purposes of this invention. Thus, the estimator 25, the template generator 27, and the matching unit 33 are realized as computer program modules employing respective algorithms for performing the respective tasks. The pace note digitizer 29 partly is realized as a computer program module, and partly as a physical scanner, or is connected with a physical scanner, in order to be able to scan written pace notes. The data processing device 21 is arranged to receive input data from the laser scanner 1 and to store it in the database storage 35 for further processing. The user interface typically comprises a screen, a keyboard, and a data output unit arranged to output the pace notes in one or more desired formats.

In accordance with an embodiment of the method, the templates for the pace note generation are determined through averaging certain sets of chosen trajectories of the car taken through the particular track, and generating 'characteristic' vehicle trajectories for different template types. Such trajectories could represent both real events of driving through this track, or virtual (imaginary) ones, calculated for the different styles of driving, or track conditions, or vehicle parameters. Corresponding averaged trajectories are compared to the pace notes taken in a traditional way so that a set of criteria is compiled for the further automated pace note generation. By using several sets of pace notes during the training phase of constructing pace note generation templates, better and better precision of automatically generated templates can be achieved. In case of the 'composite' templates it will make such template more generally applicable.

According to another embodiment of the method and system, a drivable model of the track is generated. In this embodiment a limited 3D computer model of the drivable area is comprised in the driving support product, and it is arranged to be executed on a computer having a drive wheel console, or a more advanced console including pedals, etc., connected to it, as represented at 41 in Fig. 10, where the computer is represented at 23. A visual representation of the three dimensional geometric data of the track is created and shown on the computer screen 39. Like in a computer racing game, a person is able to drive along the virtual track at a chosen speed and the screen will show corresponding changes in the scenery.

In present embodiment the virtual driving is linked to one of the pre-set reference trajectories on the track. This gives the person a good impression of how the track will be to drive in reality, and the pace notes generated for the track can be tested in more realistic conditions. In a most basic alternative, the visual representation of the track is a grey scale or colored point model constructed based upon the 3D geometric data points. However, the space between the points can be also colored to obtain a more realistic image. As a further alternative, GPS data is collected in parallel with the laser scanning, and a video of the track is produced as well during the laser scanning. By employing the GPS data to synchronize the video with the geometric data, the video can be played back while the person is driving on the computer.

According to a further embodiment of the method, the trajectory is adjusted to the one actually chosen by the driver in the virtual driving exercise through the computer controls (like in the computer games), and the pace notes can be then adjusted, or fine tuned, according to the track properties corresponding to the actual trajectory. This embodiment can also be used for better tuning the corresponding individual pace note templates.

As an even more complex alternative, a detailed computer model of the car dynamics, i.e. its behavior on the track, responses to the controls etc., can be added to the drivable visualization model. This means that the behavior of a real car will be calculated by the computer and shown as the part of changing visualization of the virtual driving exercise over the detailed realistic model of the track and its nearest surroundings.

The calculation is performed by means of knowledge of the car kinematics, and information about the track extracted from the 3D geometric data. In this calculation preferably all original 3D geometric data is used in order to determine all necessary track properties, such as the kind of surface of the track, since the behavior of the car is different when driving through a curve having a rigid surface, such as asphalt, and through a curve having gravel at the surface. This drivable visualization model with kinematics of the car is a further embodiment of the driving support product. By means of this model, the driver and the co-driver are able to train to drive the track in virtual world but in a very realistic way, and at full speed without risks for their health and actual vehicle. Also, it is commonly it is not allowed to drive at full speed on a real track before the competition, but only at significantly reduced speed. By means of this model, the pace notes can be further fine tuned, providing a better performance and maximum security for the participants of the competition.

According to a further embodiment, the driver support product comprises a voice synthesizer 37, communicating with the user interface 39, vocalizing, i.e. generating a voice saying, the pace notes at right time on the virtual track during the exercise, mimicking the co-driver presence. The voice synthesizer can be added as an option to the drivable visualization model. The voice synthesizer can be linked to the computer car position on basis of collected driving area data, and may also include the additional collected GPS data linked to it. The voice synthesizer is pre-programmed to announce each pace note element at a certain distance before the associated track property, or difficulty, appears along the track, as a real co-driver will do.

Above embodiments of the method of, and support system for, generating a driving support product for a racing driver according to the present invention as defined in the appended claims have been described. These should only be seen as merely non-limiting examples. As understood by the person skilled in the art, many modifications and alternative embodiments are possible within the scope of the invention as defined by the appended claims.

It is to be noted that for the purposes of this application, and in particular with regard to the appended claims, the word "comprising" does not exclude other elements or steps, and the word "a" or "an" does not exclude a plurality, which per se will be evident to a person skilled in the art.

## Claims

1. A method of generating a driving support product for a racing driver, comprising:
- a learning phase comprising:
- generating a data set comprising three dimensional geometric data representing a learning track, by scanning a ground area including the learning track and surroundings thereof;
- estimating track properties by analyzing the data set, and generating corresponding track property data; and
- generating a template to be first generated for pace note generation , including receiving at least one set of manually generated pace notes of the learning track, digitizing the manually generated pace notes, and matching the digitized pace notes of the learning track with the track property data of the learning track; and
- a driving support product generation phase comprising:
- generating a data set comprising three dimensional geometric data representing a track, by scanning a ground area including the track and surroundings thereof;
- estimating track properties by analyzing the data set, and generating corresponding track property data; and
- generating a driving support product comprising a set of pace notes for the track, by applying the template to the track property data.

2. The method according to claim 1, comprising identifying scanning data points representing the track by comparing scanning data points to detect deviations between them, and applying at least one deviation threshold and horizontal extension parameters.

3. The method according to any one of the preceding claims, said estimating track properties comprising identifying at least one property of a set of properties comprising curves, crests, and slopes.

4. The method according to any one of the preceding claims, said estimating track properties comprising determining a trajectory within the track, and determining the track properties along the trajectory.

5. The method according to claim 4, said determining a trajectory comprising estimating a centre line of the track as the trajectory.

6. The method according to claim 4, said determining a trajectory comprising one of estimating a shortest path through the track and estimating a path on basis of experience of how a driver would drive along the track as the trajectory.

7. The method according to any one of claims 4 to 6, said determining a trajectory comprising:
- receiving data of a trajectory driven by a user when driving a computer executable program for simulating driving along the track with the vehicle; and
- adapting an originally determined trajectory to the trajectory driven by the user; and adjusting the pace notes accordingly.

8. The method according to any one of the preceding claims, comprising applying a raster on the data set to generate a data subset, which is used for the further operations.

9. The method according to any one of the preceding claims, wherein said template is determined on basis of a mean value of several received sets of manually generated pace notes.

10. The method according to any one of the preceding claims, said generating a template comprising generating a template adapted to an individual user.

11. The method according to any one of the preceding claims, further comprising:
- generating vocalized pace notes related to and synchronized in time with the corresponding track properties; and
- providing the vocalized pace notes at a device arranged to detect where along a track it is and timely playback the vocalized pace notes.

12. The method according to any one of the preceding claims, said learning phase comprising filming the track.

13. The method according to any one of the preceding claims, said generating a driving support product further comprising generating a computer executable program for simulating driving along the track with the vehicle.

14. The method according to any one of the preceding claims, comprising providing a kinematic model for a vehicle; said generating a driving support product further comprising generating a computer executable program for simulating driving along the track with the vehicle, the movement of the vehicle being based on the kinematic model.

15. A support system for generating a driving support product, comprising a scanner (1) arranged to generate a data set comprising three dimensional geometric data representing a track by scanning a ground area including the track; and a data processing device (23), comprising:
- an estimator (25) arranged to estimate track properties by analyzing the data set, and to generate corresponding track property data;
- a template generator (27) arranged to generate a template for generating pace notes on track property data for a learning track;
- a pace note digitizer (29) arranged to scan and digitally represent manually generated pace notes;
- a storage (31) arranged to store a set of digitized pace notes of a learning track;
- a matching unit (33) arranged to match the digitized pace notes of the learning track with track property data of the learning track; and
- a user interface (39) arranged to output pace notes, which are comprised in the generated driving support product, wherein the support system is arranged to first generate the template by means of scanned data from a learning track, and then generate the driving support product comprising a set of pace notes for another track, by applying the template to track property data for said another track.

## Patentansprüche

1. Verfahren zum Erstellen eines Fahrunterstützungsprodukts für einen Rennfahrer, umfassend:
- eine Einübungsphase, die umfasst:
- Erzeugen eines Datensatzes, der dreidimensionale geometrische Daten aufweist, die eine Einübungsstrecke darstellen, indem eine Bodenfläche abgetastet wird, welche die Einübungsstrecke und ihre Umgebung einschließt;
- Abschätzen der Streckeneigenschaften durch Analysieren des Datensatzes und Erzeugen entsprechender Streckeneigenschaftsdaten; und
- Erzeugen einer Vorlage, die zuerst für das Erstellen von Aufschrieben zu erzeugen ist, mit einem Aufnehmen von mindestens einem Satz von Aufschrieben der Einübungsstrecke, die von Hand erstellt wurden, einem Digitalisieren der von Hand erstellten Aufschriebe und einem Abgleichen der digitalisierten Aufschriebe der Einübungsstrecke mit den Streckeneigenschaftsdaten der Einübungsstrecke; und
- eine Fahrunterstützungsprodukt-Erstellungsphase, die umfasst:
- Erzeugen eines Datensatzes, der dreidimensionale geometrische Daten aufweist, die eine Strecke darstellen, indem eine Bodenfläche abgetastet wird, welche die Strecke und ihre Umgebung einschließt;
- Abschätzen der Streckeneigenschaften durch Analysieren des Datensatzes und Erzeugen entsprechender Streckeneigenschaftsdaten; und
- Erstellen eines Fahrunterstützungsprodukts, das einen Satz von Aufschrieben für die Strecke umfasst, indem die Vorlage auf die Streckeneigenschaftsdaten angewendet wird.

2. Verfahren nach Anspruch 1, das ein Kennzeichnen von Abtastdatenpunkten umfasst, welche die Strecke darstellen, indem die Abtastdatenpunkte verglichen werden, um Abweichungen zwischen ihnen zu erfassen, und indem mindestens ein Abweichungsschwellenwert und Horizontalausdehnungsparameter angewendet werden.

3. Verfahren nach einem der vorhergehenden Ansprüche, wobei das Abschätzen von Streckeneigenschaften umfasst, dass mindestens eine Eigenschaft von einem Satz von Eigenschaften gekennzeichnet wird, die Kurven, Kuppen und Gefälle umfassen.

4. Verfahren nach einem der vorhergehenden Ansprüche, wobei das Abschätzen von Streckeneigenschaften umfasst, dass eine Bewegungsbahn innerhalb der Strecke bestimmt wird und dass die Streckeneigenschaften entlang der Bewegungsbahn bestimmt werden.

5. Verfahren nach Anspruch 4, wobei das Bestimmen einer Bewegungsbahn umfasst, dass eine Mittellinie der Strecke als die Bewegungsbahn abgeschätzt wird.

6. Verfahren nach Anspruch 4, wobei das Bestimmen einer Bewegungsbahn umfasst, dass entweder ein kürzester Weg durch die Strecke abgeschätzt wird oder dass als Bewegungsbahn ein Weg auf Basis der Erfahrung abgeschätzt wird, wie ein Fahrer entlang der Strecke fahren würde.

7. Verfahren nach einem der Ansprüche 4 bis 6, wobei das Bestimmen einer Bewegungsbahn umfasst:
- Aufnehmen von Daten einer Bewegungsbahn, die von einem Benutzer gefahren wird, wenn ein computerausführbares Programm gefahren wird, um das des Fahren mit dem Fahrzeug entlang der Strecke zu simulieren; und
- Anpassen einer ursprünglich bestimmten Bewegungsbahn an die Bewegungsbahn, die vom Benutzer gefahren wird, und Angleichen der Aufschriebe dementsprechend.

8. Verfahren nach einem der vorhergehenden Ansprüche, ein Anwenden eines Rasters auf den Datensatz umfassend, um einen Teildatensatz zu erzeugen, der für die weiteren Einsätze verwendet wird.

9. Verfahren nach einem der vorhergehenden Ansprüche, wobei die Vorlage auf Basis eines Mittelwerts von verschiedenen aufgenommenen Sätzen von Aufschrieben bestimmt wird, die von Hand erstellt wurden.

10. Verfahren nach einem der vorhergehenden Ansprüche, wobei das Erstellen einer Vorlage umfasst, dass eine Vorlage erstellt wird, die an einen individuellen Benutzer angepasst ist.

11. Verfahren nach einem der vorhergehenden Ansprüche, ferner umfassend:
- Erzeugen von Aufschrieben mit Sprachausgabe, die auf die entsprechenden Streckeneigenschaften bezogen und mit ihnen zeitlich synchronisiert sind; und
- Bereitstellen der Aufschriebe mit Sprachausgabe in einer Vorrichtung, die eingerichtet ist, ihren Ort entlang einer Strecke zu ermitteln und die Aufschriebe mit Sprachausgabe rechtzeitig wiederzugeben.

12. Verfahren nach einem der vorhergehenden Ansprüche, wobei die Einübungsphase ein Filmen der Strecke umfasst.

13. Verfahren nach einem der vorhergehenden Ansprüche, wobei das Erstellen eines Fahrunterstützungsprodukts ferner ein Erzeugen eines computerausführbaren Programms zum Simulieren des Fahrens entlang der Strecke mit einem Fahrzeug umfasst.

14. Verfahren nach einem der vorhergehenden Ansprüche, ein Bereitstellen eines kinematischen Modells für ein Fahrzeug umfassend, wobei das Erstellen eines Fahrunterstützungsprodukts ferner das Erzeugen eines computerausführbaren Programms zum Simulieren des Fahrens entlang der Strecke mit einem Fahrzeug umfasst, wobei die Bewegung des Fahrzeugs auf dem kinematischen Modell basiert.

15. Unterstützungssystem zum Erstellen eines Fahrunterstützungsprodukts mit einem Scanner (1), der eingerichtet ist, einen Datensatz zu erzeugen, der dreidimensionale geometrische Daten aufweist, die eine Strecke darstellen, indem eine Bodenfläche abgetastet wird, welche die Strecke umfasst; und mit einer Datenverarbeitungsvorrichtung (23), umfassend:
- einen Abschätzer (25), der eingerichtet ist, Streckeneigenschaften durch Analysieren des Datensatzes abzuschätzen und entsprechende Streckeneigenschaftsdaten zu erzeugen; und
- einen Vorlagenerzeuger (27), der eingerichtet ist, eine Vorlage für das Erstellen von Aufschrieben über Streckeneigenschaftsdaten für eine Einübungsstrecke zu erzeugen;
- einen Aufschrieb-Digitalisierer (29), der eingerichtet ist, die von Hand erstellten Aufschriebe einzuscannen und digital darzustellen;
- einen Speicher (31), der eingerichtet ist, einen Satz von digitalisierten Aufschrieben einer Einübungsstrecke zu speichern;
- eine Abgleicheinheit (33), die eingerichtet ist, die digitalisierten Aufschriebe der Einübungsstrecke mit dem Streckeneigenschaftsdaten der Einübungsstrecke abzugleichen; und
- eine Benutzerschnittstelle (39), die eingerichtet ist, Aufschriebe auszugeben, die in dem erstellten Fahrunterstützungsprodukt enthalten sind, wobei das Unterstützungssystem eingerichtet ist, zuerst die Vorlage mithilfe abgetasteter Daten von einer Einübungsstrecke zu erzeugen und dann das Fahrunterstützungsprodukt zu erstellen, das einen Satz von Aufschrieben für eine weitere Strecke umfasst, wobei die Vorlage auf die Streckeneigenschaftsdaten für die weitere Strecke angewendet wird.

## Revendications

1. Procédé de génération d'un produit d'assistance à la conduite pour un pilote de course, comprenant :
- une phase d'apprentissage comprenant de :
- générer un ensemble de données comprenant des données géométriques en trois dimensions représentant une piste d'apprentissage, en balayant une zone du sol incluant la piste d'apprentissage et les environs de celle-ci ;
- estimer les propriétés de la piste en analysant l'ensemble de données et générer des données de propriété de piste correspondant ; et
- générer un modèle à générer en premier pour la génération de notes de conduite, incluant de recevoir au moins un ensemble de notes de conduite générées manuellement de la piste d'apprentissage, numériser les notes de conduite générées manuellement et faire concorder les notes de conduite numérisées de la piste d'apprentissage avec les données de propriété de piste de la piste d'apprentissage ; et
- une phase de génération de produit d'assistance à la conduite comprenant de :
- générer un ensemble de données comprenant des données géométriques en trois dimensions représentant une piste, en balayant une zone du sol incluant la piste et les environs de celle-ci ;
- estimer les propriétés de piste en analysant l'ensemble de données et générer des données de propriétés de pistes correspondantes ; et
- générer un produit d'assistance à la conduite comprenant un ensemble de notes de conduite pour la piste, en appliquant le modèle aux données de propriété de piste.

2. Procédé selon la revendication 1, comprenant d'identifier les points de données de balayage représentant la piste en comparant les points de données de balayage afin de détecter des écarts entre eux et d'appliquer au moins un seuil d'écart et des paramètres d'extension horizontale.

3. Procédé selon une quelconque des revendications précédentes, ladite estimation des propriétés de piste comprenant d'identifier au moins une propriété d'un ensemble de propriétés comprenant des courbes, des crêtes et des pentes.

4. Procédé selon une quelconque des revendications précédentes, ladite estimation des propriétés de pistes comprenant de déterminer une trajectoire à l'intérieur de la piste et de déterminer les propriétés de piste le long de la trajectoire.

5. Procédé selon la revendication 4, ladite détermination d'une trajectoire comprenant d'estimer une ligne centrale de la piste comme la trajectoire.

6. Procédé selon la revendication 4, ladite détermination d'une trajectoire comprenant une de l'estimation d'un trajet le plus court à travers la piste et l'estimation d'un trajet sur la base de l'expérience avec laquelle un conducteur conduirait le long de la piste comme trajectoire.

7. Procédé selon une quelconque des revendications 4 à 6, ladite détermination d'une trajectoire comprenant de :
- recevoir des données d'une trajectoire parcourue par un utilisateur lorsqu'il conduit un programme exécutable par ordinateur pour simuler la conduite le long de la piste avec le véhicule ; et
- adapter une trajectoire déterminée à l'origine sur la trajectoire parcourue par l'utilisateur ; et ajuster les note de conduite en conséquence.

8. Procédé selon une quelconque des revendications précédentes, comprenant d'appliquer une matrice sur l'ensemble de données afin de générer un sous-ensemble de données, qui est utilisé pour les opérations ultérieures.

9. Procédé selon une quelconque des revendications précédentes, dans lequel ledit modèle est déterminé sur la base d'une valeur moyenne de plusieurs ensembles reçus de notes de conduite générées manuellement.

10. Procédé selon une quelconque des revendications précédentes, ladite génération d'un modèle comprenant de générer un modèle adapté à un utilisateur individuel.

11. Procédé selon une quelconque des revendications précédentes comprenant en outre de :
- générer des notes de conduite prononcées relatives à et synchronisées dans le temps avec les propriétés de piste correspondantes ; et
- fournir les notes de conduite prononcées à un dispositif agencé afin de détecter où il se trouve le long d'une piste et rejouer de manière synchronisée les notes de conduite prononcées.

12. Procédé selon une quelconque des revendications précédentes, ladite phase d'apprentissage comprenant de filmer la piste.

13. Procédé selon une quelconque des revendications précédentes, ladite génération d'un produit d'assistance à la conduite comprenant en outre de générer un programme exécutable par ordinateur pour simuler la conduite le long de la piste avec le véhicule.

14. Procédé selon une quelconque des revendications précédentes, comprenant de fournir un modèle cinématique pour un véhicule ; ladite génération d'un produit d'assistance à la conduite comprenant en outre de générer un programme exécutable par un ordinateur pour simuler la conduite le long de la piste avec le véhicule, le mouvement du véhicule étant basé sur le modèle cinématique.

15. Système d'assistance pour générer un produit d'assistance à la conduite, comprenant un scanner (1) agencé afin de générer un ensemble de données comprenant des données géométriques en trois dimensions représentant une piste en balayant une zone du sol incluant la piste ; et un dispositif de traitement de données (23), comprenant :
- un estimateur (25) agencée pour estimer des propriétés de piste en analysant l'ensemble de données et générer des données de propriété de piste correspondantes ;
- un générateur de modèle (27) agencé pour générer un modèle pour générer des notes de conduite sur les données de propriété de piste pour une piste d'apprentissage ;
- un numériseur de notes de conduite (29) agencé pour balayer et représenter numériquement des notes de conduite générées manuellement ;
- une mémoire (31) agencée pour mémoriser un ensemble de notes de conduite numérisées d'une piste d'apprentissage ;
- une unité de concordance (33) agencée pour faire concorder les notes de conduite numérisées de la piste d'apprentissage avec les données de propriété de piste de la piste d'apprentissage ; et
- une interface d'utilisateur (39) agencée pour délivrer des notes de conduite, qui sont comprises dans le produit d'assistance à la conduite généré, dans lequel le système d'assistance est agencé afin de générer d'abord le modèle au moyen des données scannées d'une piste d'apprentissage et ensuite générer le produit d'assistance à la conduite comprenant un ensemble de notes de conduite pour une autre piste, en appliquant le modèle aux données de propriété de piste pour ladite autre piste.
